# EUROPÄISCHE PATENTSCHRIFT

(11) **EP 3 077 434 B1**
(45) Veröffentlichungstag und Bekanntmachung des Hinweises auf die Patenterteilung: **24.02.2021**
(21) Anmeldenummer: 14808581.4
(22) Anmeldetag: 02.12.2014
(51) Int. Cl.: C08G 18/10, C08G 18/12

(54) **REAKTIONSSYSTEM FÜR EINEN MONOMERARMEN 1-K POLYURETHANSCHAUM**
REAKTIONSSYSTEM FÜR EINEN MONOMERARMEN 1-K POLYURETHANSCHAUM
SYSTÈME RÉACTIONNEL POUR UNE MOUSSE DE POLYURÉTHANE MONOCOMPOSANT PAUVRE EN MONOMÈRES

(30) Priorität: 04.12.2013 EP 13195652
(43) Veröffentlichungstag der Anmeldung: 12.10.2016
(73) Patentinhaber: Covestro Intellectual Property GmbH & Co. KG, 51373 Leverkusen (DE)
(72) Erfinder: MICHELS, Erhard, 21680 Stade (DE); ALBERS, Reinhard, 51375 Leverkusen (DE); VOGEL, Stephanie, 40764 Langenfeld (DE)
(74) Vertreter: Levpat
(86) Internationale Anmeldenummer: PCT/EP2014/076234
(87) Internationale Veröffentlichungsnummer: WO 2015/082461

(56) Entgegenhaltungen:
- WO-A1-2013/117541
- DE-A1- 10 259 248
- US-B2- 6 887 911

## Beschreibung

Die vorliegende Erfindung betrifft ein Einkomponenten-Reaktionssystem zur Herstellung von Polyurethan- Hartschaumstoffen, umfassend die folgenden Bestandteile:
A) eine organische Polyisocyanatkomponente, die teilweise oder vollständig als Präpolymer vorliegt,
B) eine isocyanatreaktive Komponente, deren funktionelle Gruppen ausschließlich solche mit wenigstens einem Zerewitinoff-reaktiven Wasserstoffatom sowie gewünschtenfalls mit wenigstens einem Halogenatom sind,
C) zumindest einen Stabilisator,
D) zumindest einen Katalysator der geeignet ist, die Reaktion der Polyisocyanatkomponente A) mit der isocyanatreaktiven Komponente B) zu katalysieren, sowie
E) gewünschtenfalls Hilfs- und Zusatzstoffe sowie Treibmittel und Co-Treibmittel,
dadurch gekennzeichnet, dass
der Stabilisator C) ausgewählt ist aus der Gruppe der Polyether-Polydialkyloxysilan-Copolymere und einen Trübungspunkt von wenigstens 50 °C aufweist, gemessen in einer 4 Gew.-% wässrigen Lösung des Stabilisators und schrittweise Erhöhung der Temperatur von 20 °C startend mit einer Aufheizrate von 2 °C/min und Ermittlung des Trübungspunktes durch optische Beurteilung des Zeitpunkts der einsetztenden Trübung.

Die Erfindung betrifft ferner ein Verfahren zur Herstellung eines Einkomponenten-Reaktionssystems, ein Verfahren zur Herstellung von Polyurethan-Hartschaumstoffen aus einem Einkomponenten-Reaktionssystem, einen Hartschaumstoff, erhältlich aus einem Einkomponenten-Reaktionssystem, die Verwendung eines Einkomponenten-Reaktionssystems als 1-K Montageschaum, sowie einen Druckbehälter enthaltend ein Reaktionssystem und ein Treibmittel.

Die Herstellung von Polyurethanschäumen aus Einwegdruckbehältern ist bekannt. Dabei wird ein isocyanatgruppenhaltiges Präpolymer durch Reaktion von Polyolen unter Zusatz von Schaumstabilisatoren und Katalysatoren sowie gegebenenfalls von Weichmachern, Flammschutzmitteln, Vernetzern und weiteren Zusatzstoffen mit organischen Di- und/oder Polyisocyanaten hergestellt. Diese Umsetzung erfolgt normalerweise in Gegenwart von verflüssigtem Treibgas in einem Druckbehälter. Nach Abschluss der Präpolymerbildung kann der Schaum dann über ein Ventil dosiert ausgetragen werden. Dabei besitzt der Schaum zuerst eine sahnige Konsistenz und härtet dann anschließend durch Einwirken der Umgebungsfeuchtigkeit, z.B. aus der Luft unter Volumenvergrößerung, aus. Bei solchen Schäumen spricht man daher von Einkomponentenschäumen (1K-Schäume).

Um die gewünschten Endeigenschaften des Schaumes wie z.B. Härte, Zellbeschaffenheit zu erhalten, wird mit einem deutlichen Überschuss des Isocyanats gegenüber der Polyolkomponenten gearbeitet. Auf diese Weise wird die sogenannte Vorverlängerung und damit die Molekulargewichtsverteilung des Präpolymers reguliert. Je geringer die Vorverlängerung, desto enger die Molekulargewichtsverteilung, desto präziser einstellbar die Endeigenschaften des ausgehärteten PUR-Schaums. Bedingt durch diese Vorgehensweise liegt jedoch nach Abschluss der Präpolymerbildung im Druckbehälter immer noch viel freies, nicht umgesetztes MDI in der Größenordnung von ca. 7 bis 15 Gew.-% bezogen auf den Gesamtinhalt des Druckbehälters vor. Den Großteil dieses freien MDIs stellt monomeres MDI dar. Wegen dieses hohen Gehalts an freiem monomeren MDI müssen solche Zusammensetzungen laut EU-Recht mit R40 und "mindergiftig, enthält Diphenyl-4,4'-diisocyanat" und dem Gefahrensymbol Xn gekennzeichnet werden. In Deutschland kommt als verschärfte Gesetzgebung noch das sogenannte Selbstbedienungsverbot (§4 ChemVerbV) hinzu, weshalb in Deutschland mit R40 gekennzeichnete Produkte im freien Handel nicht direkt an den Endverbraucher verkauft werden dürfen. Deshalb stehen solche 1K-PUR-Schaumdosen in deutschen Baumärkten in abschließbaren Vitrinen und dürfen nur von geschultem Personal an den Endverbraucher verkauft werden (§5 ChemVerbV). Ähnliche Gesetzgebungen existieren in Frankreich, Österreich und Slowenien.

Aus EP 0 746 580 B1 ist eine Zusammensetzung zur Herstellung von 1-K Polyurethanschäumen aus Einwegdruckbehältern bekannt, bei der der im Druckbehälter verbliebene Rest spätestens einen Tag nach der Anwendung einen Gehalt an Diisocyanat-Monomeren von weniger als 5,0 Gew.-% hat, wobei das Isocyanat-Prepolymere einen Isocyanat-Gehalt von 8 bis 30 Gew.-% besitzt.

In der DE 10 2009 045 027 A1 ist eine vernetzbare schäumbare Zusammensetzung mit niedrigem Gehalt an monomeren Isocyanaten beschrieben. Diese enthält a) 10 bis 90 Gew.-% eines Prepolymeren aus Polyesterdiolen umgesetzt mit einem Überschuss an Diisocyanaten und nachfolgender Entfernung des überschüssigen monomeren Diisocyanats, b) 10 bis 90 Gew.-% einer Komponente auf Basis von Polyetherpolyolen, die entweder mindestens eine (Si(OR)₃-Gruppe oder mindestens eine NCO-Gruppe aufweist, c) 0,1 bis 30 Gew.-% Additive, d) und mindestens ein Treibmittel, wobei die Polyesterdiole und die Polyetherdiole eine Molmasse (M_{N}) unter 5000 g/mol aufweisen und die Mischung aus a und b einen Gehalt an monomeren Diisocyanaten unter 1 Gew.-% enthält WO 2013/117541 A1 offenbart PUR-/PIR-Hartschäume, die ein gutes Wärmedämmverhalten bei gleichzeitig hoher Stabilität und guter Flammbeständigkeit aufweisen. In den Tabellen 1-4, wird ein NCO-terminiertes Präpolymer aus Isocyanaten und Polyolen hergestellt. Dann wird das NCO-terminierte Präpolymer mit einem Polyol, einem Treibkatalysator, einem PIR-Katalysator, Wasser sowie einem Schaumstabilisator (Tegostab B8465, ein Polydimethylsiloxane-Polyoxyalkylen-Copolymer) zur Reaktion gebracht.

Die vorgenannten Zusammensetzungen zeichnen sich unter anderem auch dadurch aus, dass zur Einstellung gewünschter Brandschutz-/ Flammschutzeigenschaften nicht unerhebliche Mengen an Flammschutzadditiven zugesetzt werden müssen. Die Verwendung von hohen Konzentrationen an flüssigen Flammschutzmitteln ist jedoch nachteilig, da nicht in das Polyurethangerüst einbaubare Flammschutzmittel wie als Weichmacher fungieren und die Schaumhärte negativ beeinflussen.

Die Aufgabe der vorliegenden Erfindung besteht darin, eine monomerenarme 1K-PUR-Formulierung auf Basis eines entsprechenden Präpolymers zur Verfügung zu stellen, die eine hohe mechanische Festigkeit eines daraus hergestellten Schaums bei gleichzeitig gutem Brandverhalten besitzt.

Die Aufgabe wird gelöst durch ein Einkomponenten-Reaktionssystem zur Herstellung von Polyurethan-Hartschaumstoffen, umfassend die folgenden Bestandteile:
A) eine organische Polyisocyanatkomponente, die teilweise oder vollständig als Präpolymer vorliegt,
B) eine isocyanatreaktive Komponente, deren funktionelle Gruppen ausschließlich solche mit wenigstens einem Zerewitinoff-reaktiven Wasserstoffatom sowie gewünschtenfalls mit wenigstens einem Halogenatom sind,
C) zumindest einen Stabilisator,
D) zumindest einen Katalysator der geeignet ist, die Reaktion der Polyisocyanatkomponente A) mit der isocyanatreaktiven Komponente B) zu katalysieren, sowie
E) gewünschtenfalls Hilfs- und Zusatzstoffe sowie Treibmittel und Co-Treibmittel,
wobei das Reaktionssystem dadurch gekennzeichnet ist, dass der Stabilisator C) ausgewählt ist aus der Gruppe der Polyether-Polydialkoxysilan-Copolymere und einen Trübungspunkt von wenigstens 50 °C aufweist, gemessen an einer 4 Gew.-% wässrigen Lösung des Stabilisators und schrittweise Erhöhung der Temperatur von 20 °C startend mit einer Aufheizrate von 2 °C/min und Ermittlung des Trübungspunktes durch optische Beurteilung des Zeilpunktes der einsetzenden Trübung.

Überraschenderweise wurde gefunden, dass sich die Brandklassen E (Flammhöhe ≤ 150 mm) und F (Flammhöhe > 150 mm) mit ein und derselben Formulierung durch den Einsatz der erfindungsgemäßen Stabilisatoren einstellen lassen. Dabei können nur sehr geringe oder gar keine Zusätze an Flammschutzmittel verwendet werden. Diese Beobachtung ist vor allem deswegen überraschend, da im aktuellen Stand der Technik entweder mit sehr hohen Mengen an Flammschutzmitteln gearbeitet wird oder aber auf Polyolkomponenten, die Polyesterpolyole enthalten, ausgewichen wird. Die Verwendung von hohen Konzentrationen an flüssigen Flammschutzmitteln ist jedoch nachteilig, da nicht in das Polyurethangerüst einbaubare Flammschutzmittel wie vorstehend bereits angemerkt als Weichmacher gelten und so die Schaumhärte stark negativ beeinflussen. Das gilt es jedoch unbedingt zu vermeiden, da durch die erfindungsgemäße Verwendung von Präpolymeren und die Vermeidung von freiem monomeren MDI die Endhärte eines solchen 1K-PUR-Schaums ohnehin bereits geringer ist als von solchen, die üblicherweise auf Basis von polymerem MDI hergestellt werden. Der Grund hierfür ist der deutlich reduzierte Anteil an monomerem MDI, der für eine entsprechend hohe Härte und Hartsegmentanteil führt. Die Kunst ist daher nicht nur auf Basis einen Präpolymers einen technisch überzeugenden PUR-Hartschaum mit vernünftigen Endhärten herzustellen, sondern diesen Schaum noch flammgeschützt auszurüsten. Die Verwendung von Polyesterpolyolen zu diesem Zweck ist erfindungsgemäß nicht unbedingt erwünscht, denn die Viskositäten von monomerenarmen Polyesterpolyol-Präpolymeren sind bereits exorbitant hoch, so dass ein darauf basierendes Präpolymer industriell nur noch schwer verarbeitbar wäre. Insofern ist das erfindungsgemäße Reaktionssystem beziehungsweise dessen Polyolkomponente B) bei dieser Ausführungsform vorzugsweise frei von Polyesterpolyolen oder darauf basierenden Präpolymeren.

Selbiges wie vorstehend und auch im Folgenden anhand von MDI als Isocyanat erläutert gilt auch für andere Isocyanate, wie beispielsweise TDI.

In bevorzugter Ausgestaltung des erfindungsgemäßen Reaktionssystems beträgt der Gehalt an monomerem Polyisocyanat höchstens 1 Gew.-%. Dabei weist die organische Polyisocyanatkomponente A) vorzugsweise einen Isocyanatgehalt von weniger als 15 Gew.-% bezogen auf die Polyisocyanatkomponente A) auf, insbesondere von weniger als 12 Gew.-%.

Überraschenderweise wurde gefunden, dass das erfindungsgemäße Reaktionssystem trotz des niedrigen Gehalts an monomerem Polyisocyanat und dem damit einhergehenden höheren Molekulargewicht des Präpolymeren der organischen Polyisocyanatkomponente sich noch mit den übrigen Bestandteilen des Reaktionssystem mischen und aus Einwegdruckbehältern ausschäumen lässt und dabei Schäume mit einer zufriedenstellenden Härte liefert.

Bei der vorgenannten bevorzugten Ausführungsform ist vorgesehen, dass das Reaktionssystem einen Gehalt an monomerem Polyisocyanat von höchstens 1 Gew.-% aufweist. Der Gehalt an monomerem Isocyanat kann somit auch weniger als 0,1% betragen. Hierunter wird im Rahmen der vorliegenden Erfindung verstanden, dass dieser Gehalt unmittelbar nach dem Vermischen der einzelnen Komponenten des Reaktionssystems nicht überschritten wird. Insofern kann sich der Gehalt an monomerem Polyisocyanat über einen Zeitraum mehrerer Tage gegebenenfalls noch verringern.

Die organische Polyisocyanatkomponente A) des erfindungsgemäßen Reaktionssystems kann bei einer Funktionalität von 2,5 ein mittleres Molekulargewicht von 700 g/mol bis 5000 g/mol aufweisen, insbesondere 800 g/mol bis 2500 g/mol.

Die bei dem erfindungsgemäßen Reaktionssystem eingesetzte organische Polyisocyanatkomponente A) kann im Prinzip auf jede dem Fachmann bekannte Weise erzeugt sein. In vorteilhafter Ausgestaltung wird diese durch Umsetzung von zumindest einer isocyanatreaktiven Verbindung mit einem Überschuss zumindest einer monomeren organischen Polyisocyanatverbindung gefolgt von Abdestillieren der nicht reagierten monomeren organischen Polyisocyanatverbindung hergestellt, wobei die isocyanatreaktive Verbindung insbesondere ausgewählt ist aus Polyetherpolyolen, Polyesterpolyolen und/ oder Polyetheresterpolyolen, bevorzugt aus einem Propylenoxideinheiten aufweisenden Polyol.

Die organische Polyisocyanatkomponente A) enthält bevorzugt keine die Präpolymersierung katalysierende Katalysatorkomponente ("Präpolymerisierungskatalysator") bzw. höchstens technisch unvermeidbare Spuren eines Präpolymerisierungskatalysators.

Die organische Polyisocyanatkomponente A) kann einen Isocyanatgehalt von 2 bis 15 Gew.-% bezogen auf die Polyisocyanatkomponente A) aufweisen, insbesondere 3 bis 13,5 Gew.-%.

Ferner kann die organische Polyisocyanatkomponente A) eine Viskosität von 2000 mPa s bis 70000 mPa s gemessen bei 50°C nach DIN 53019 aufweisen, insbesondere 5000mPa s bis 50000 MPa s. Dies ist besonders vorteilhaft, weil solche Polyisocyanatkomponenten A) noch gut ausschäumbar sind und dabei gleichzeitig die Einhaltung des erfindungsgemäßen geringen Restmonomergehaltes ermöglichen.

Wie vorstehend erwähnt lassen sich entsprechende Brandeigenschaften ohne (nennenswerten) weiteren Zusatz von Flammschutzmitteln einstellen. Das ist vor allem deswegen überraschend, da dem durchschnittlichen Fachmann bekannt ist, dass normale PUR-Hartschäume sehr hohe Zusätze (20 - 50 Gew.-% bezogen auf die Polyolformulierung) an Flammschutzmitteln benötigen, um diese Brandanforderungen zu erreichen. Dagegen kommen PUR/PIR-Hartschäume schon mit geringeren Zusätzen wie beispielsweise < 20 Gew.-% bezogen auf die Polyolformulierung an Flammschutzmittel aufgrund der inhärenten flammwidrigeren Eigenschaften des trimerisierten Polymers aus.

Überraschenderweise wurde nun eine Formulierung gefunden, die mit extrem wenig bzw. sogar gar keinem Flammschutzmittel auskommt, um die Brandanforderungen für Brandklasse E zu erfüllen. Insofern enthält nach einer besonders bevorzugten Ausführungsform des erfindungsgemäßen Reaktionssystems dieses weniger als 5 Gew.-% eines Flammschutzmittels eines Flammschutzmittels ausgewählt aus der Gruppe der Verbindungen bestehend aus halogenierten Phosphaten, Arylphosphaten, Alkylphosphaten, Alkyl-Aryl-phosphaten, Phosphonaten sowie Flammschutzmitteln ohne gegenüber Polyisocyanaten und/ oder gegenüber Polyolen reaktiven Gruppen. Bevorzugt enthält das Reaktionssystem weniger als 2 Gew.-%, vorzugsweise weniger als 1 Gew.-%, .-% und besonders bevorzugt kein Flammschutzmittel ausgewählt aus dieser Gruppe. Dies ist von Vorteil, weil bei Verwendung solcher Flammschutzmittel die Härte des aus dem Reaktionssystem erzeugten Schaumes durch die weichmachende Wirkung dieser Flammschutzmittel reduziert werden könnte, was in der Regel unerwünscht ist.

Weiter bevorzugt ist es, dass die isocyanatreaktive Komponente B) wenigstens ein Polyol enthält oder aus einem oder mehreren Polyolen besteht, wobei das Polyol insbesondere
- eine OH-Zahl von 100 bis 400 mg KOH/g aufweist, vorzugsweise 150 bis 300 und/ oder
- eine OH-Funktionalität von 1bis 4 besitzt, bevorzugt 1,5 bis 3,5, besonders bevorzugt 1,9 bis 3,0.

Der Einsatz dieser Polyole ist deshalb bevorzugt, bei deren Verwendung die daraus erhaltenen Schäume gemäß EN ISO 11925-2 geprüft eine Flammhöhe von ≤ 150 mm aufweisen, was gemäß DIN EN 13501-1 der Brandklasse E entspricht. So kann beispielsweise die genannte Brandklasse eingehalten werden, ohne ein zusätzliches Flammschutzmittel ohne gegenüber Polyisocyanaten und/ oder gegenüber Polyolen reaktiven Gruppen zu verwenden, was aufgrund der weichmachenden Eigenschaften der Härte des Schaumes abträglich wäre. Besonders bevorzugte Polyole sind ausgewählt aus Polyetherpolyolen, Polyesterpolyolen und/ oder Polyetheresterpolyolen, bevorzugt aus einem Ethylenoxideinheiten aufweisenden Polyol, besonders bevorzugt aus einem Polyethylenpolyol.

Nach einer weitere Ausführungsform des erfindungsgemäßen Reaktionssystems ist der Stabilisator C) ausgewählt aus der Gruppe der Polyether-Polydialkoxysilan-Copolymere, wobei die Alkoxygruppen unabhängig voneinander ausgewählt sind aus aliphatischen Kohlenwasserstoffresten mit einem bis zehn Kohlenstoffatomen, vorzugsweise aus Methyl-, Ethyl-, n-Propyl- oder i-Propyl-Resten.

Der Stabilisator C) weist einen Trübungspunkt von wenigstens 50 °C auf, vorzugsweise von wenigstens 60 °C, gemessen in einer 4 Gew.-% wässrigen Lösung des Stabilisators und schrittweise Erhöhung der Temperatur von 20 °C startend mit einer Aufheizrate von 2 °C/min und Ermittlung des Trübungspunktes durch optische Beurteilung des Zeitpunktes der einsetzenden Trübung. Dies ist von Vorteil, weil durch Einsatz solcher Stabilisatoren die Brandschutzeigenschaften der erhaltenen Polyurethan-Hartschäume weiter gesteigert werden kann. Die vorgenannten Werte für den Trübungspunkt können alternativ auch nephelometrisch unter Heranziehung der DIN-EN-ISO 7027 bestimmt werden, ohne an die vorgenannte Verfahrensweise mit kombinierter Temperaturänderung gebunden zu sein.

Bei dem erfindungsgemäßen Reaktionssystem kann als Katalysator D) prinzipiell jeder für diesen Zweck dem Fachmann als geeignet bekannter Katalysator verwendet werden, beispielsweise ein Aminkatalysator.

Nach einer bevorzugten Weiterbildung des erfindungsgemäßen Reaktionssystems beträgt der Gehalt an monomerem Polyisocyanat weniger als 1 Gew.-%, insbesondere weniger als 0,9 Gew.-%, bevorzugt 0,1 Gew.-% oder weniger.

Das Reaktionssystem kann ferner eine Säure mit einem pKs-Wert von wenigstens 0 enthalten, insbesondere in einer Menge von 10 bis 500 ppm bezogen auf die Menge an organischer Polyisocyanatkomponente A), vorzugsweise von 50 bis 300 ppm. Durch den Zusatz solcher Verbindungen kann eine Reaktion des Präpolymeren mit sich selbst weitestgehend unterdrückt werden, beispielsweise eine Allophanatisierung.

Ein bevorzugtes erfindungsgemäßes Reaktionssystem enthält oder besteht aus den folgenden Komponenten:
70 bis 90 Gew.-% an eine organischer Polyisocyanatkomponente A),
0,5 bis 5 Gew.-% an isocyanatreaktiver Komponente B),
0,1 bis 1,0 Gew.-% an Stabilisator C) ausgewählt aus der Gruppe der Polyether-Polydialkoxysilan-Copolymere und einen Trübungspunkt von wenigstens 50 °C, gemessen in einer 4Gew.-% wässrigen Lösung des Stabilisators und schrittweise Erhöhung der Temperatur von 20 °C startend mit einer Aufheizrate von 2 °C/min und Ermittlung des Trübungspunktes durch optische Beurteilung des Zeitpunktes der einsetzenden Trübung,
0,1 bis 1,0 Gew.-% an Katalysator D) und/ oder
9 bis 25 Gew.-% an Hilfs- und Zusatzstoffen sowie Treibmittel und Co-Treibmittel, jeweils bezogen auf das Reaktionssystem.

Ein weiterer Gegenstand der vorliegenden Erfindung betrifft ein Verfahren zur Herstellung eines erfindungsgemäßen Einkomponenten-Reaktionssystems, wobei
A) eine organische Polyisocyanatkomponente, die teilweise oder vollständig als Präpolymer vorliegt,
B) eine isocyanatreaktive Komponente, deren funktionelle Gruppen ausschließlich solche mit wenigstens einem Zerewitinoff-reaktiven Wasserstoffatom sowie gewünschtenfalls mit wenigstens einem Halogenatom sind,
C) zumindest einen Stabilisator,
D) zumindest einen Katalysator der geeignet ist, die Reaktion der Polyisocyanatkomponente A) mit der isocyanatreaktiven Komponente B) zu katalysieren, sowie
E) gewünschtenfalls Hilfs- und Zusatzstoffe sowie Treibmittel und Co-Treibmittel miteinander vermischt werden,
wobei das Verfahren dadurch gekennzeichnet ist, dass der Stabilisator C) ausgewählt ist aus der Gruppe der Polyether-Polydialkoxysilan-Copolymere und einen Trübungspunkt von wenigstens 50 °C aufweist, gemessen in einer 4 Gew.-% wässrigen Lösung des Stabilisators und schrittweise Erhöhung der Temperatur von 20 °C startend mit einer Aufheizrate von 2 °C/min und Ermittlung des Trübungspunktes durch optische Beurteilung des Zeitpunktes der einsetzenden Trübung.

Die Erfindung betrifft des Weiteren ein Verfahren zur Herstellung von PUR- Hartschaumstoffen, bei dem man die Komponenten A) bis E) eines erfindungsgemäßen Reaktionssystems miteinander vermischt und insbesondere unter Einwirkung von Feuchtigkeit reagieren lässt.

Ein weiterer Gegenstand der vorliegenden Erfindung ist ein Hartschaumstoff, erhältlich durch Vermischen und Umsetzen der Komponenten A) bis E) eines erfindungsgemäßen Reaktionssystems.

Die Erfindung ist auch auf die Verwendung eines erfindungsgemäßen Reaktionssystems als 1-K Montageschaum gerichtet, wobei das Reaktionssystem und ein Treibmittel sowie gewünschtenfalls ein Co-Treibmittel insbesondere in einen Druckbehälter, wie einen Einwegdruckbehälter, eingefüllt sind.

Schließlich betrifft die Erfindung auch einen Druckbehälter, insbesondere einen Einwegdruckbehälter, enthaltend ein erfindungsgemäßes Reaktionssystem und ein Treibmittel sowie gewünschtenfalls ein Co-Treibmittel.

Die vorliegende Erfindung wird im Folgenden anhand von Ausführungsbeispielen näher erläutert.

### Experimenteller Teil

Die Herstellung der erfindungsgemäßen PUR-Hartschaumstoffe erfolgt nach einem dem Fachmann bekannten Zweistufenverfahren, bei dem die Reaktionskomponenten diskontinuierlich miteinander zur Reaktion gebracht werden und dann in bzw. auf geeignete Formen/Substrate/Hohlräume zur Aushärtung gebracht werden. Beispiele sind in USA-A 2 761 565, in G. Oertel (Hrsg.) "Kunststoff-Handbuch", Band VII, Carl Hanser Verlag, 3. Auflage, München 1993, S. 284 ff., sowie in K. Uhlig (Hrsg.) "Polyurethan Taschenbuch", Carl Hanser Verlag, 2. Auflage, Wien 2001, S. 83-102 beschrieben.

Im Falle der vorliegenden Anmeldung wurden 1-Komponenten- (1K-)Rezepturen bestehend aus einer treibgashaltigen Präpolymerformulierung (s. Tabelle 1) und Additiven in einer Druckdose hergestellt. Hierzu wurden nacheinander ein NCO-endständiges Präpolymer, eine NCO-reaktive Komponente und Additive (z.B. Katalysatoren, Schaumstabilisatoren) in eine Druckdose eingewogen und diese dicht verschlossen. Anschließend wurde diese Dose mit Treibgas beaufschlagt und die Mischung durch Schütteln homogenisiert. Der Schaumaustrag erfolgte nach Lagerung der Dose für einen Tag unter Standardbedingungen (Raumtemperatur, 1013 mbar), wobei das jeweilige Substrat zuvor gezielt mit Wasser angefeuchtet wurde. Die Durchhärtung des Form- bzw. Freischaumes erfolgte ebenfalls bei den aktuell vorherrschenden Luftdrücken und Luftfeuchtigkeiten bei Raumtemperatur.

Es kamen folgende Stoffe zum Einsatz:
- Polyol 1:: Polyetherpolyol mit einer OHZ von 235 mg KOH/g, einer theoretischen Funktionalität von 3,0 und einer Viskosität von 250 mPas bei 25 °C, hergestellt durch die Umsetzung eines trifunktionellen Startergemisches mit Propylenenoxid (Bayer MaterialScience);
- Polyol 2:: Polyetherpolyol mit einer OHZ von 112 mg KOH/g, einer theoretischen Funktionalität von 2,0 und einer Viskosität von 140 mPas bei 25 °C, hergestellt durch die Umsetzung eines difunktionellen Startergemisches mit Propylenenoxid (Bayer MaterialScience);
- Polyol 3:: PHT4-DIOL (2-(2-Hydroxyethoxy) ethyl-2-hydroxypropyl-3, 4, 5, 6-tetrabromphthalat), (Chemtura);
- Polyol 4:: Polyetherpolyol mit einer OHZ von 190 mg KOH/g, einer theoretischen Funktionalität von 2,0 und einer Viskosität von 122 mPas bei 25 °C, hergestellt durch die Umsetzung eines difunktionellen Startergemisches mit Ethylenoxid (Bayer MaterialScience);
- Polyol 5:: Polyetherpolyol mit einer OHZ von 255 mg KOH/g, einer theoretischen Funktionalität von 3,0 und einer Viskosität von 265 mPas bei 25 °C, hergestellt durch die Umsetzung eines trifunktionellen Startergemisches mit Ethylenoxid (Bayer MaterialScience);
- Polyol 6:: Polyetherpolyol mit einer OHZ von 232 mg KOH/g, einer theoretischen Funktionalität von 3,0 und einer Viskosität von 350 mPas bei 25 °C, hergestellt durch die Umsetzung eines trifunktionellen Startergemisches mit Propylenoxid (Bayer MaterialScience);
- Polyol 7:: Polyetherpolyol mit einer OHZ von 260 mg KOH/g, einer theoretischen Funktionalität von 2,0 und einer Viskosität von 70 mPas bei 25 °C, hergestellt durch die Umsetzung eines difunktionellen Startergemisches mit Propylenoxid (Bayer MaterialScience);
- Polyol 8:: Polyesterpolyol mit einer OHZ von 240 mg KOH/g, einer theoretischen Funktionalität von 2,0 und einer Viskosität von 15600 mPas bei 20 °C, hergestellt durch die Kondensation von Phthalsäure und Adipinsäure mit Diethylenglykol (Bayer MaterialScience);
- Isocyanat 1:: monomeres aromatisches Diisocyanat auf Basis von 4,4'-Diphenylmethandiisocyanat (ca. 40 Gew.-%) und 2,4-Diphenylmethan-diisocyanat (ca. 60 Gew.-%), (Bayer MaterialScience);
- Präpolymer 1:: NCO-endständiges Präpolymer mit der Funktionalität f=2,5, einem Rest-NCO-Gehalt von 6,5 %, einer Viskosität von 22000 mPa s bei 50°C und einem Restgehalt an freiem monomeren MDI von ca. 0,65 %, erhalten durch die Umsetzung von Polyol 1 und Polyol 2 mit Isocyanat 1 mit anschließender Destillation;
- Präpolymer 2:: NCO-endständiges Präpolymer mit der Funktionalität f=2,5, einem Rest-NCO-Gehalt von 6,9 %, einer Viskosität von 15000 mPa s bei 50°C und einem Restgehalt an freiem monomeren MDI von ca. 0,90 %, erhalten durch die Umsetzung von Polyol 1 und Polyol 2 mit Isocyanat 1 mit anschließender Destillation;
- Stabilisatoren:: Tegostab® (Evonik):
- Stabilisator A1:: Tegostab B8421 Polyether-Polydimethylsiloxan-Copolymere
- Stabilisator A2:: Tegostab B8461 Polyether-Polydimethylsiloxan-Copolymere
- Stabilisator B1:: Tegostab B8870 Polyether-Polydimethylsiloxan-Copolymere
- Stabilisator B2:: Tegostab B8871 Polyether-Polydimethylsiloxan-Copolymere
- Aminkatalysator:: DMDEE (2,2'-Dimorpholinodiethylether), (AirProducts)
- Isobutan:: (Gerling Holz+Co)
- DME:: Dimethylether (Gerling Holz+Co)

### Definition des Trübungspunktes der Stabilisatoren:

Die bei dieser Anmeldung eingesetzten Schaumstabilisatoren gehören alle der Klasse der Polyether-Polydimethylsiloxan-Copolymere an. Ihr Aufbau und ihre Herstellungsweise unterscheiden sich nicht grundlegend, dennoch zeigen sich in ihren jeweiligen Wirkweisen Differenzen, die sich über die chemischen Zusammensetzungen erklären lassen. Man kann Schaumstabilisatoren daher in Klassen wie z.B. hydrophil oder hydrophob und siloxanarm oder siloxanreich aufteilen. Makroskopisch lässt sich eine solche Klassifizierung über den jeweiligen Trübungspunkt eines Schaumstabilisators durchführen. Der Trübungspunkt eines Schaumstabilisators ist somit ein Qualitätsmerkmal, gleichzeitig jedoch stark davon abhängig, nach welcher Methode er bestimmt wurde. Der Grad der Eintrübung bzw. der Klarpunkt lässt sich nephelometrisch unter Heranziehung der DIN-EN-ISO 7027 bestimmen, wobei dort aber nicht eine Verfahrensweise mit kombinierter Temperaturänderung beschrieben wird. In der Praxis bewährt hat sich daher eine rein visuelle Bestimmungsmethode, die sich angesichts des abzufahrenden Temperaturintervalls als schnell durchzuführen und ausreichend aussagekräftig bestätigt hat. Die in der vorliegenden Anmeldung angegebenen Trübungspunkte wurden somit wie folgt gemessen: Eine 4%ige wässrige Lösungen eines entsprechenden Polyether-Polydimethylsiloxan-Copolymers wurde unter stetem Rühren schrittweise langsam erwärmt. Die Temperatur, bei der eine Trübung der einheitlich warmen Lösung einsetzte, definierte den jeweiligen Trübungspunkt. Demzufolge besitzen relativ hydrophile Schaumstabilisatoren eher höhere Trübungspunkte als relativ hydrophobe Schaumstabilisatoren. Die so bestimmten Trübungspunkte der in dieser Anmeldung eingesetzten Schaumstabilisatoren sind in Tabelle 1 zusammengefasst.

**Tabelle 1: Charakteristika der eingesetzten Schaumstabilisatoren.**

| *Stabilisator* | *Trübungspunkt [°C]* | *Qualitätsmerkmal* |
|---|---|---|
| Stabilisator A1 | 66 | hydrophil |
| Stabilisator A2 | 64 | hydrophil |
| Stabilisator B1 | 35 | hydrophob |
| Stabilisator B2 | < 23 | hydrophob |

### Präpolymersynthese:

Die Standard-Präpolymersynthese ist dem durchschnittlichen Fachmann bekannt und wird daher im Folgenden nicht im Detail beschrieben. Kurz zusammengefasst: Isocyanat 1 wurde im stöchiometrischen Überschuss mit Polyol 1 und Polyol 2 in bekannter Weise in einer ersten Stufe zu den jeweiligen Rohpräpolymeren umgesetzt. Zur Herstellung der monomerarmen Isocyanat-Präpolymere 1 und 2 aus diesen Rohpräpolymeren wurde das im Überschuss eingesetzte, flüchtige, monomere Isocyanat 1 bei Temperaturen von 100 bis 200 °C im Vakuum unter Verwendung von Dünnschicht- oder Kurzweg-Verdampfern so lange abdestilliert, bis der gewünschte Restmonomergehalt erreicht worden war. Die Eigenschaften der so hergestellten Präpolymere 1 und 2 sind in Tabelle 2 zusammengefasst:

**Tabelle 2: Produkteigenschaften der Präpolymere 1 und 2.**

| *Eigenschaft* | *Dimension* | *Präpolymer 1* | *Präpolymer 2* |
|---|---|---|---|
| Funktionalität | - | 2,5 | 2,5 |
| Rest-NCO-Gehalt | % | 6,5 | 6,9 |
| Viskostität (50 °C) | mPa s | 22000 | 15000 |
| freies, monomeres MDI* | Gew.-% | 0,65 | 0,90 |

| | | | |
|---|---|---|---|
| *bestimmt nach einer validierten HPLC-Methode des externen Prüfinstituts CURRENTA GmbH & Co. Ohg. | | | |

### Herstellung der 1K-Formulierungen in Einweg-Druckbehältern:

Aus den Präpolymeren 1 und 2 wurden in Einweg-Druckbehältern auf dem durchschnittlichen Fachmann bekannte Art und Weise 1K-Formulierungen hergestellt. Hierzu wurden nacheinander die benötigten Mengen des jeweiligen Präpolymers 1 oder 2 in dem offenen Druckbehälter vorgelegt. Anschließend wurden die entsprechenden Mengen des Stabilisators, des Aminkatalysators und eines weiteren Polyols zugewogen und der Einweg-Druckbehälter dicht verschlossen. Über das aufgesetzte Ventil wurden mittels einer entsprechenden Dosiereinheit die benötigten Mengen der Treibgase zugesetzt. Abschließend wurde der Einweg-Druckbehälter bis zur vollständigen Homogenisierung der 1K-Formulierung geschüttelt. Die so hergestellten 1K-Formulierungen sind nachfolgend in den Beispielen der Tabelle 3 angegeben. Diese Formulierungen können in denen hier angegebenen Verhältnissen beliebig auf die gewünschten Füllvolumina verschiedener Einweg-Druckbehälter angepasst werden. Sofern nicht anders angegeben, wurden von den in Tabelle 3 aufgeführten 1K-Formulierungen je 750 mL in Einweg-Druckbehälter mit einem Fassungsvermögen von 1000 mL gefüllt.

### Herstellung von Freischäumen:

Nach der Lagerung des mit der 1K-Formulierung gefüllten Einweg-Druckbehälters erfolgte der Austrag auf eine mit Wasser besprühte Papierlage (PE-beschichtetes Natronkraftpapier, 130 g/m², 595 x 160 mm). Hierzu wurde der Druckbehälter über Kopf in einer langsamen, linienziehenden Bewegung ohne Unterbrechung über das Papier geführt. Der Schaum expandierte unter den aktuell vorherrschenden Bedingungen (Raumtemperatur, Normaldruck). Die zur Aushärtung erforderliche Feuchtigkeit wurde über das Besprühen des Papiers mit Wasser geliefert. Diese Verfahrensweise lieferte die reproduzierbarsten Ergebnisse, da sie somit unabhängig von den jeweiligen vorherrschenden Luftfeuchtigkeiten war.

### Messung der Klebfreizeit:

Nach erfolgtem Austrag wurde mit einem Holzstab in definierten Zeitabständen die Klebrigkeit der Schaumoberfläche geprüft. Hierzu wurde der Holzstab leicht auf die Schaumoberfläche aufgelegt und wieder angehoben. Der Zeitpunkt, zu dem keine Fäden mehr gezogen wurden oder keine Materialablösung an der Schaumoberfläche mehr beobachtet werden konnte, definiert die Klebfreizeit.

### Bewertung von Schaumstruktur, Zellgröße und Härte:

Diese drei Kriterien wurden generell einen Tag nach erfolgtem Austrag am Freischaum subjektiv bewertet. Hierzu lagen dem in dieser Methodik erfahrenen Mitarbeiter entsprechende Vergleichsmuster vor, anhand derer die Bewertung gemäß eines Schulnotensystems vorgenommen wurde. Daher bedeuten die hierzu angegebenen Zahlen Folgendes: 1 = sehr gut, 2 = gut, 3 = befriedigend, 4 = ausreichend, 5 = mangelhaft, 6 = ungenügend.

### Herstellung von Prüfkörpern zur Messung der Brandeigenschaften:

Die Brandeigenschaften wurden an geschäumten Formteilen hergestellt. Hierzu wurde ein in der Länge rechts und links mit Gipskartonplatten (700 x 90 x 12,5 mm) ausgekleideter, nach oben offener Schacht (700 x 90 x 55 mm) mit einem einzigen, ununterbrochenen Austrag ausgeschäumt. Die über die Länge von 700 mm oben überstehende Schaumfront wurde so abgetrennt, dass die Schaumschicht mit den Gipskartonplatten abschloss. Somit ergaben sich 700 mm lange und 90 mm hohe Sandwichelemente, die über die Dicke verteilt folgenden lagigen Aufbau hatten: Gipskarton (12,5 mm), PUR-Schaum (30 mm), Gipskarton (12,5 mm). Diese Elemente wurden auf 190 mm abgelängt und einer Brandprüfung unterzogen. Dazu wurde ein Kleinbrennertest gemäß DIN 4102-1 (Kantenbeflammung) durchgeführt.

Alle Ergebnisse zu den gemäß der vorliegenden Anmeldung hergestellten PUR-Hartschäume und deren Eigenschaften sind in Tabelle 4 zusammengefasst.

**Tabelle 3: Zusammensetzung der 1K-Formulierungen. Die angegebenen Werte sind Gew.-Tle.**

| ***Beispiel*** | ***1*** | ***2*** | ***3*** | ***4*** | ***5*** | ***6*** | ***7*** | ***8*** | ***9*** | ***10*** | ***11*** | ***12*** | ***13*** |
|---|---|---|---|---|---|---|---|---|---|---|---|---|---|
| Polyol 3 | 5,0 | 5,0 | | | | | 5,0 | | | 5,0 | 5,0 | | |
| Polyol 4 | | | | 5,0 | | 5,0 | | | | | | 5,0 | |
| Polyol 5 | | | 5,0 | | | | | | | | | | 5,0 |
| Polyol 6 | | | | | | | | 5,0 | | | | | |
| Polyol 7 | | | | | | | | | 5,0 | | | | |
| Polyol 8 | | | | | 5,0 | | | | | | | | |
| Stabilisator A1 | | 1,1 | 1,1 | 1,1 | 1,1 | 1,1 | 1,1 | 1,1 | 1,1 | | | | |
| Stabilisator A2 | 1,1 | | | | | | | | | | | | |
| Stabilisator B1 | | | | | | | | | | | 1,1 | | |
| Stabilisator B2 | | | | | | | | | | 1,1 | | 1,1 | 1,1 |
| Aminkatalysator | 1,4 | 1,4 | 1,4 | 1,4 | 1,4 | 1,4 | 1,4 | 1,4 | 1,4 | 1,4 | 1,4 | 1,4 | 1,4 |
| Präpolymer 1 | 353 | 353 | 353 | 353 | 353 | | | 353 | 353 | 353 | 353 | 353 | 353 |
| Präpolymer 2 | | | | | | 353 | 353 | | | | | | |
| Isobutan | 57,8 | 57,8 | 57,8 | 57,8 | 57,8 | 57,8 | 57,8 | 57,8 | 57,8 | 57,8 | 57,8 | 57,8 | 57,8 |
| Dimethylether | 35,8 | 35,8 | 35,8 | 35,8 | 35,8 | 35,8 | 35,8 | 35,8 | 35,8 | 35,8 | 35,8 | 35,8 | 35,8 |

**Tabelle 4: Zusammenfassung der gemessenen Schaumeigenschaften.**

| ***Beispiel*** | | ***1*** | ***2*** | ***3*** | ***4*** | ***5*** | ***6*** | ***7*** | ***8*** | ***9*** | ***10*** | ***11*** | ***12*** | ***13*** |
|---|---|---|---|---|---|---|---|---|---|---|---|---|---|---|
| Klebfreizeit | min | 13 | 12 | 11 | 13 | 10 | 18 | 17 | 12 | 14 | 12 | 22 | 22 | 18 |
| Schaumstruktur*^{a}* | - | 1 | 1 | 1 | 1 | 1 | 1 | 1 | 1 | 1 | 1 | 1 | 1 | 1 |
| Zellgröße*^{a}* | - | 3 | 2 | 2 | 2 | 3 | 1 | 2 | 1 | 2 | 3 | 3 | 4 | 3 |
| Härte*^{a}* | - | 1 | 2 | 2 | 2 | 2 | 2 | 2 | 2 | 3 | 1 | 1 | 2 | 2 |
| Flammhöhe | mm | 138 | 107 | 103 | 100 | 83 | 110 | 70 | 200 | 173 | 300 | 300 | 167 | 153 |
| Brandklasse*^{b}* | - | B2 | B2 | B2 | B2 | B2 | B2 | B2 | B3 | B3 | B3 | B3 | B3 | B3 |
| freies MDI-Monomer im Präpolymer | % | 0,65 | 0,65 | 0,65 | 0,65 | 0,65 | 0,90 | 0,90 | 0,65 | 0,65 | 0,65 | 0,65 | 0,65 | 0,65 |
| freies MDI-Monomer im Druckbehälter | % | 0,51 | 0,51 | 0,51 | 0,51 | 0,51 | 0,70 | 0,70 | 0,51 | 0,51 | 0,51 | 0,51 | 0,51 | 0,51 |

| | | | | | | | | | | | | | | |
|---|---|---|---|---|---|---|---|---|---|---|---|---|---|---|
| *^{a}*subjektive Bewertung entspricht Schulnoten, wobei 1 = sehr gut, 2 0 gut, 3 = befriedigend, 4 = ausreichend, 5 = mangelhaft, 6 = ungenügend bedeuten; *^{b}*gemäß DIN 4102-1. | | | | | | | | | | | | | | |

Die Beispiele 1 bis 5 wurden genauso wie die Beispiele 8 bis 13 alle mit Präpolymer 1 durchgeführt. Die Konzentrationen der Treibgase, des Präpolymers, des Katalysators, des Stabilisators und des verwendeten Polyols waren in jedem Fall gleich. Die Beispiele unterschieden sich immer nur in einem Punkt. Es wurde entweder das Polyol oder der Stabilisator variiert. Trotz dieser geringfügigen Variation zeigten alle Beispiele 1 bis 5 ein B2-Brandverhalten, wohingegen alle Beispiele 8 bis 13 ein B3-Brandverhalten aufwiesen. Im Einzelnen, vergleicht man die Beispiele 1 und 2 mit den Beispielen 10 und 11, so fällt auf, dass bei Verwendung des identischen Polyols und einfachem Austausch des Stabilisators das Brandverhalten völlig unterschiedlich ausfallen kann. Im Falle von Beispiel 1 und 2 wurden die Stabilisatoren A1 und A2 eingesetzt. Beide sind als hydrophil einzustufen und besitzen einen relativ hohen Trübungspunkt (vgl. Tabelle 1). Im Gegensatz dazu sind die Stabilisatoren B1 und B2 hydrophob und besitzen relativ niedrige Trübungspunkte (vgl. Tabelle 1). Dieser Trend im Brandverhalten in Abhängigkeit von der Wahl des Stabilisators wird um so deutlicher, als dass er nicht nur für einzelne Stabilisatoren im direkten Vergleich zu finden war. Die Beispiele 1 und 2 zeigen diesen Trend für zwei verschiedene Stabilisatoren, welche derselben Kategorie (vgl. Tabelle 1) angehören. Im Vergleich dazu weisen die in den Beispielen 10 und 11 hergestellten Schäume ein ebenfalls sehr gut untereinander vergleichbares Brandverhalten aus, was jedoch völlig im Kontrast zu dem der Schäume aus den Beispielen 1 und 2 steht, bei denen die Stabilisatoren A1 und A2 eingesetzt wurden. Der einfache Austausch eines Stabilisators bei ansonsten identischer Zusammensetzung führte daher überraschenderweise zu einem völlig unterschiedlichen Brandverhalten.

Neben dem Stabilisator hatte jedoch offenbar auch der sehr geringe, 1%ige Zusatz des Polyols einen starken Einfluss auf das makroskopische Brandverhalten eines daraus hergestellten Schaumes. Vergleicht man die Beispiele 1 bis 5 untereinander, so wird deutlich, dass sich beim Einsatz des einbaubaren, bromierten Flammschutzmittels (Polyol 3), der beiden EO-haltigen Polyolen 4 und 5 und des Polyesterpolyols (Polyol 8) immer ein B2-Brandverhalten bei Verwendung eines Stabilisators vom Typ A ergab. Im direkten Vergleich hierzu ergab sich in den Beispielen 8 und 9 eindeutig ein B3-Brandverhalten, obwohl ein Stabilisator vom Typ A verwendet worden war. Der Grund ist offenbar in den eingesetzten Polyolen zu suchen. In beiden Fällen wurden Polyetherpolyole verwendet, deren Seitenketten ausschließlich aus Propylenoxid aufgebaut sind. Das Polyetherpolyol alleine definiert aber offenbar noch nicht das zu erwartende Brandverhalten. Vergleicht man nämlich die Beispiele 3 und 4 mit den Beispielen 12 und 13, so fällt auf, dass in allen vier Fällen EO-haltige Polyole eingesetzt worden waren, jedoch wurden diese in den Beispielen 12 und 13 mit Stabilisatoren des Typs B kombiniert, woraus sich schließlich ein B3-Verhalten ergab.

Zusammenfassend wurde daher überraschenderweise festgestellt, dass die Kombination von EO-haltigen Polyolen oder Polyesterpolyolen oder bromierten einbaubaren Flammschutzmitteln mit einem Stabilisator vom Typ A in der geprüften 1K-Formulierung der vorliegenden Anmeldung zu einem B2-Brandverhalten führte. Diese Kombination ist daher zur Herstellung von PUR-Schäumen, die z.B. in Deutschland im Bausektor als Montageschaum verarbeitet werden sollen, besonders bevorzugt, da für diese Anwendung gesetzlich ein B2-Brandverhalten der eingesetzten Materialien vorgeschrieben ist. Wird jedoch nur eine Komponente ausgetauscht, ändert sich das Brandverhalten drastisch. So kann z.B. durch die Wahl eines Stabilisators vom Typ B bei ansonsten gleichbleibender Formulierung aus einer B2-Formulierung (vgl. Beispiele 1 bis 5) eine B3-Formulierung (vgl. Beispiele 10 bis 13) gemacht werden. Andererseits ist die Wahl eines Stabilisators vom Typ A nicht Grundvoraussetzung zum Erhalt einer B2-Formulierung. Die Kombination eines Stabilisators vom Typ A lieferte so nämlich in den Beispielen 8 und 9 eine B3-Formulierung, da in diesen Fällen Polyetherpolyole in der Formulierung kombiniert worden waren, die ausschließlich propoxylierte Seitenketten besitzen.

Die vorliegende Erfindung ist nicht auf ein einzelnes Präpolymer beschränkt. So wurde in den Beispielen 6 und 7 Präpolymer 2 zur Herstellung der 1K-Formulierung eingesetzt. Das resultierende Brandverhalten ist direkt vergleichbar mit dem der Formulierungen aus den Beispielen 4 und 2. Diese Beobachtung bestätigt die allgemeine Gültigkeit der vorliegenden Erfindung.

## Patentansprüche

1. Einkomponenten-Reaktionssystem zur Herstellung von Polyurethan-Hartschaumstoffen, umfassend die folgenden Bestandteile:
A) eine organische Polyisocyanatkomponente, die teilweise oder vollständig als Präpolymer vorliegt,
B) eine isocyanatreaktive Komponente, deren funktionelle Gruppen ausschließlich solche mit wenigstens einem Zerewitinoff-reaktiven Wasserstoffatom sowie gewünschtenfalls mit wenigstens einem Halogenatom sind,
C) zumindest einen Stabilisator,
D) zumindest einen Katalysator der geeignet ist, die Reaktion der Polyisocyanatkomponente A) mit der isocyanatreaktiven Komponente B) zu katalysieren, sowie
E) gewünschtenfalls Hilfs- und Zusatzstoffe sowie Treibmittel und Co-Treibmittel,
**dadurch gekennzeichnet, dass**
der Stabilisator C) ausgewählt ist aus der Gruppe der Polyether-Polydialkoxysilan-Copolymere und einen Trübungspunkt von wenigstens 50 °C aufweist, gemessen in einer 4 Gew.-% wässrigen Lösung des Stabilisators und schrittweise Erhöhung der Temperatur von 20 °C startend mit einer Aufheizrate von 2 °C/min und Ermittlung des Trübungspunktes durch optische Beurteilung des Zeitpunktes der einsetzenden Trübung.

2. Einkomponenten-Reaktionssystem nach Anspruch 1, **dadurch gekennzeichnet, dass** der Gehalt an monomerem Polyisocyanat höchstens 1 Gew.-% beträgt und dass die organische Polyisocyanatkomponente A) einen Isocyanatgehalt von weniger als 15 Gew.-% bezogen auf die Polyisocyanatkomponente A) aufweist.

3. Einkomponenten-Reaktionssystem nach Anspruch 1 oder 2, **dadurch gekennzeichnet, dass** die organische Polyisocyanatkomponente A) bei einer Funktionalität von 2,5 ein mittleres Molekulargewicht von 700 g/mol bis 5000 g/mol aufweist, insbesondere 800 g/mol bis 2500 g/mol.

4. Einkomponenten-Reaktionssystem nach Anspruch 1, **dadurch gekennzeichnet, dass** die organische Polyisocyanatkomponente A) durch Umsetzung von zumindest einer isocyanatreaktiven Verbindung mit einem Überschuss zumindest einer monomeren organischen Polyisocyanatverbindung gefolgt von Abdestillieren der nicht reagierten monomeren organischen Polyisocyanatverbindung hergestellt wird, wobei die
isocyanatreaktive Verbindung ausgewählt ist aus Polyetherpolyolen, Polyesterpolyolen und/ oder Polyetheresterpolyolen, bevorzugt aus einem Propylenoxideinheiten aufweisenden Polyol.

5. Einkomponenten-Reaktionssystem nach einem der vorstehenden Ansprüche, **dadurch gekennzeichnet, dass** die organische Polyisocyanatkomponente A) keinen Präpolymerisierungskatalysator oder höchstens technisch unvermeidbare Spuren eines Präpolymerisierungskatalysators aufweist.

6. Einkomponenten-Reaktionssystem nach einem der vorstehenden Ansprüche, **dadurch gekennzeichnet, dass** das Einkomponenten-Reaktionssystem weniger als 5 Gew.-%, eines Flammschutzmittels ausgewählt aus der Gruppe der Verbindungen bestehend aus halogenierten Phosphaten, Arylphosphaten, Alkylphosphaten, Alkyl-Aryl-phosphaten, Phosphonaten sowie Flammschutzmitteln ohne gegenüber Polyisocyanaten und/ oder gegenüber Polyolen reaktiven Gruppen enthält, bevorzugt weniger als 2 Gew.-%, vorzugsweise weniger als 1 Gew.-% und besonders bevorzugt kein Flammschutzmittel ausgewählt aus dieser Gruppe.

7. Einkomponenten-Reaktionssystem nach einem der vorstehenden Ansprüche, **dadurch gekennzeichnet, dass** die isocyanatreaktive Komponente B) wenigstens ein Polyol enthält oder aus einem oder mehreren Polyolen besteht, wobei das Polyol insbesondere
• eine OH-Zahl von 100 bis 400 mg KOH/g aufweist, vorzugsweise 150 bis 300 und/ oder
• eine OH-Funktionalität von 1bis 4 besitzt, bevorzugt 1,5 bis 3,5, besonders bevorzugt 1,9 bis 3,0, und wobei das Polyol vorzugsweise ausgewählt ist aus Polyetherpolyolen, Polyesterpolyolen und/ oder Polyetheresterpolyolen, besonders bevorzugt aus einem Ethylenoxideinheiten aufweisenden Polyol, ganz besonders bevorzugt aus einem Polyethylenpolyol.

8. Einkomponenten-Reaktionssystem nach einem der vorstehenden Ansprüche, **dadurch gekennzeichnet, dass** der Stabilisator C) ausgewählt ist aus der Gruppe der Polyether-Polydialkoxysilan-Copolymere und die Alkoxygruppen unabhängig voneinander ausgewählt sind aus aliphatischen Kohlenwasserstoffresten mit einem bis zehn Kohlenstoffatomen, vorzugsweise aus Methyl-, Ethyl-, n-Propyl- oder i-Propyl-Resten.

9. Einkomponenten-Reaktionssystem nach einem der vorstehenden Ansprüche, **dadurch gekennzeichnet, dass** der Stabilisator C) einen Trübungspunkt von wenigstens 60 °C aufweist, gemessen in einer 4 Gew.-% wässrigen Lösung des Stabilisators und schrittweise Erhöhung der Temperatur von 20 °C startend mit einer Aufheizrate von 2 °C/min und Ermittlung des Trübungspunktes durch optische Beurteilung des Zeitpunktes der einsetzenden Trübung.

10. Einkomponenten-Reaktionssystem nach einem der vorstehenden Ansprüche, **dadurch gekennzeichnet, dass** der Gehalt an monomerem Polyisocyanat weniger als 1 Gew.-% beträgt, insbesondere weniger als 0,9 Gew.-%, bevorzugt 0,1 Gew.-% oder weniger.

11. Einkomponenten-Reaktionssystem nach einem der vorstehenden Ansprüche, **dadurch gekennzeichnet, dass** das Einkomponenten-Reaktionssystem ferner eine Säure mit einem pKs-Wert von wenigstens 0 enthält, insbesondere in einer Menge von 10 bis 500 ppm bezogen auf die Menge an organischer Polyisocyanatkomponente A), vorzugsweise von 50 bis 300 ppm.

12. Einkomponenten-Reaktionssystem nach einem der vorstehenden Ansprüche, **dadurch gekennzeichnet, dass** das Einkomponenten-Reaktionssystem
70 bis 90 Gew.-% an einer organischen Polyisocyanatkomponente A),
0,5 bis 5 Gew.-% an isocyanatreaktiver Komponente B),
0,1 bis 1,0 Gew.-% an Stabilisator C),
0,1 bis 1,0 Gew.-% an Katalysator D) und/ oder
9 bis 25 Gew.-% an Hilfs- und Zusatzstoffen sowie Treibmittel und Co-Treibmittel enthält, jeweils bezogen auf das Einkomponenten-Reaktionssystem.

13. Verfahren zur Herstellung von PUR- Hartschaumstoffen, bei dem man die Komponenten A) bis E) eines Einkomponenten-Reaktionssystems nach einem der Ansprüche 1 bis 12 miteinander vermischt und insbesondere unter Einwirkung von Feuchtigkeit reagieren lässt.

14. Hartschaumstoff, erhältlich durch Vermischen und Umsetzen der Komponenten A) bis E) eines Einkomponenten-Reaktionssystems nach einem der Ansprüche 1 bis 12.

15. Verwendung eines Einkomponenten-Reaktionssystems nach einem der Ansprüche 1 bis 12 als 1-K Montageschaum, wobei das Einkomponenten-Reaktionssystem und ein Treibmittel sowie gewünschtenfalls ein Co-Treibmittel insbesondere in einen Druckbehälter eingefüllt sind.

16. Druckbehälter, insbesondere Einwegdruckbehälter, enthaltend ein Einkomponenten-Reaktionssystem nach einem der Ansprüche 1 bis 12 und ein Treibmittel sowie gewünschtenfalls ein Co-Treibmittel.

## Claims

1. One component reaction system for production of rigid polyurethane foams that comprises the following constituents:
A) an organic polyisocyanate component partially or completely in the form of a prepolymer,
B) an isocyanate-reactive component whose functional groups are exclusively those having at least one Zerewitinoff-reactive hydrogen atom and also, optionally, at least one halogen atom,
C) at least one stabilizer,
D) at least one catalyst suitable for catalyzing the reaction of said polyisocyanate component A) with said isocyanate-reactive component B), and also
E) optionally auxiliary and added-substance materials and also blowing agent and co-blowing agent,
**characterized in that**
said stabilizer C) is selected from the group of polyether-polydialkoxysilane copolymers and has a cloud point of not less than 50°C measured in a 4 wt% aqueous solution of the stabilizer and incrementally raising the temperature from 20°C starting at a heating rate of 2°C/min and ascertaining the cloud point by visually judging the onset of clouding.

2. One component reaction system according to Claim 1, **characterized in that** the monomeric polyisocyanate content is not more than 1 wt%, and **in that** said organic polyisocyanate component A) has an isocyanate content of less than 15 wt% based on said polyisocyanate component A).

3. One component reaction system according to Claim 1 or 2, **characterized in that** said organic polyisocyanate component A) combines a functionality of 2.5 with an average molecular weight of 700 g/mol to 5000 g/mol, in particular 800 g/mol to 2500 g/mol.

4. One component reaction system according to Claim 1, **characterized in that** said organic polyisocyanate component A) is prepared by reaction of at least one isocyanate-reactive compound with an excess of at least one monomeric organic polyisocyanate compound followed by distillative removal of unreacted monomeric organic polyisocyanate compound, wherein the isocyanate-reactive compound is selected from polyether polyols, polyester polyols and/or polyetherester polyols, preferably from a polyol comprising propylene oxide units.

5. One component reaction system according to any preceding claim, **characterized in that** said organic polyisocyanate component A) comprises no prepolymerization catalyst or at most technically unavoidable traces of a prepolymerization catalyst.

6. One component reaction system according to any preceding claim, **characterized in that** the one component reaction system comprises less than 5 wt% of a flame retardant selected from the group of compounds consisting of halogenated phosphates, aryl phosphates, alkyl phosphates, alkyl aryl phosphates, phosphonates and also flame retardants without groups reactive toward polyisocyanates and/or polyols, preferably less than 2 wt%, more preferably less than 1 wt% and yet more preferably no flame retardant selected from this group.

7. One component reaction system according to any preceding claim, **characterized in that** said isocyanate-reactive component B) contains at least one polyol or consists of one or more polyols, wherein the polyol more particularly has
• an OH number of 100 to 400 mg KOH/g, preferably 150 to 300, and/or
• an OH functionality of 1 to 4, preferably 1.5 to 3.5, more preferably 1.9 to 3.0, and wherein the polyol is preferably selected from polyether polyols, polyester polyols and/or polyetherester polyols, more preferably from a polyol comprising ethylene oxide units, most preferably from a polyethylene polyol.

8. One component reaction system according to any preceding claim, **characterized in that** said stabilizer C) is selected from the group of polyether-polydialkoxysilane copolymers, and the alkoxy groups are each selected independently from aliphatic hydrocarbyl moieties having one to ten carbon atoms, preferably from methyl, ethyl, n-propyl or i-propyl.

9. One component reaction system according to any preceding claim, **characterized in that** said stabilizer C) has a cloud point of not less than 60°C, measured in a 4 wt% aqueous solution of the stabilizer and incrementally raising the temperature from 20°C starting at a heating rate of 2°C/min and ascertaining the cloud point by visually judging the onset of clouding.

10. One component reaction system according to any preceding claim, **characterized in that** the monomeric polyisocyanate content is less than 1 wt%, in particular less than 0.9 wt%, preferably 0.1 wt% or less.

11. One component reaction system according to any preceding claim, **characterized in that** the one component reaction system further comprises an acid having a pKa value of not less than 0, in particular in an amount of 10 to 500 ppm based on the amount of organic polyisocyanate component A), preferably in an amount of 50 to 300 ppm.

12. One component reaction system according to any preceding claim, **characterized in that** the one component reaction system comprises
70 to 90 wt% of one organic polyisocyanate component A),
0.5 to 5 wt% of isocyanate-reactive component B),
0.1 to 1.0 wt% of stabilizer C),
0.1 to 1.0 wt% of catalyst D), and/or
9 to 25 wt% of auxiliary and added-substance materials and also blowing agent and co-blowing agent,
all based on the one component reaction system.

13. Method of preparing rigid PU foams, which comprises said components A) to E) of a one component reaction system according to any of Claims 1 to 12 being mixed and more particularly reacted with one another under agency of moisture.

14. Rigid foam obtainable by mixing and reacting said components A) to E) of a one component reaction system according to any of Claims 1 to 12.

15. Use of a one component reaction system according to any of Claims 1 to 12 as a 1-K assembly foam, wherein the one component reaction system and a blowing agent and optionally also a co-blowing agent are more particularly contained in a pressurized container.

16. Pressurized container, in particular a disposable pressurized container, containing a one component reaction system according to any of Claims 1 to 12 and a blowing agent and optionally also a co-blowing agent.

## Revendications

1. Système réactionnel monocomposant pour la fabrication de mousses dures de polyuréthane, comprenant les constituants suivants :
A) un composant polyisocyanate organique, qui se présente en partie ou en totalité sous la forme d'un prépolymère,
B) un composant réactif avec les isocyanates, dont les groupes fonctionnels sont exclusivement des groupes comprenant au moins un atome d'hydrogène réactif selon Zerewitinoff et éventuellement comprenant au moins un atome d'halogène,
C) au moins un stabilisateur,
D) au moins un catalyseur qui est approprié pour catalyser la réaction du composant polyisocyanate A) avec le composant réactif avec les isocyanates B), et
E) éventuellement des adjuvants et additifs, ainsi que des agents gonflants et des co-agents gonflants,
**caractérisé en ce que**
le stabilisateur C) est choisi dans le groupe des copolymères de polyéther-polydialcoxysilane et présente un point de trouble d'au moins 50 °C, mesuré dans une solution aqueuse à 4 % en poids du stabilisateur, avec élévation graduelle de la température à partir de 20 °C avec un taux de chauffe de 2 °C/min, et détermination du point de trouble par évaluation optique du moment du début du trouble.

2. Système réactionnel monocomposant selon la revendication 1, **caractérisé en ce que** la teneur en polyisocyanate monomère est d'au plus 1 % en poids et **en ce que** le composant polyisocyanate organique A) présente une teneur en isocyanate inférieure à 15 % en poids, par rapport au composant polyisocyanate A).

3. Système réactionnel monocomposant selon la revendication 1 ou 2, **caractérisé en ce que** le composant polyisocyanate organique A) présente à une fonctionnalité de 2,5 un poids moléculaire moyen de 700 g/mol à 5 000 g/mol, notamment de 800 g/mol à 2 500 g/mol.

4. Système réactionnel monocomposant selon la revendication 1, **caractérisé en ce que** le composant polyisocyanate organique A) est fabriqué par mise en réaction d'au moins un composé réactif avec les isocyanates avec un excès d'au moins un composé de polyisocyanate organique monomère, suivie par l'élimination par distillation du composé de polyisocyanate organique monomère non réagi, le composé réactif avec les isocyanates étant choisi parmi les polyéther-polyols, les polyester-polyols et/ou les polyéther-ester-polyols, de préférence un polyol comprenant des unités oxyde de propylène.

5. Système réactionnel monocomposant selon l'une quelconque des revendications précédentes, **caractérisé en ce que** le composant polyisocyanate organique A) ne comprend pas de catalyseur de prépolymérisation ou au plus des traces techniquement inévitables d'un catalyseur de prépolymérisation.

6. Système réactionnel monocomposant selon l'une quelconque des revendications précédentes, **caractérisé en ce que** le système réactionnel monocomposant contient moins de 5 % en poids d'un agent ignifuge choisi dans le groupe des composés constitué par les phosphates halogénés, les arylphosphates, les alkylphosphates, les alkyl-aryl-phosphates, les phosphonates et les agents ignifuges sans groupes réactifs avec les polyisocyanates et/ou avec les polyols, de préférence moins de 2 % en poids, avantageusement moins de 1 % en poids et de manière particulièrement préférée aucun agent ignifuge choisi dans ce groupe.

7. Système réactionnel monocomposant selon l'une quelconque des revendications précédentes, **caractérisé en ce que** le composant réactif avec les isocyanates B) contient au moins un polyol ou est constitué d'un ou de plusieurs polyols, le polyol présentant notamment
- un indice OH de 100 à 400 mg KOH/g, de préférence de 150 à 300 et/ou
- une fonctionnalité OH de 1 à 4, de préférence de 1,5 à 3,5, de manière particulièrement préférée de 1,9 à 3,0, et le polyol étant de préférence choisi parmi les polyéther-polyols, les polyester-polyols et/ou les polyéther-ester-polyols, de manière particulièrement préférée un polyol comprenant des unités oxyde d'éthylène, de manière tout particulièrement préférée un polyéthylène glycol.

8. Système réactionnel monocomposant selon l'une quelconque des revendications précédentes, **caractérisé en ce que** le stabilisateur C) est choisi dans le groupe des copolymères de polyéther-polydialcoxysilane, et les groupes alcoxy sont notamment choisis indépendamment les uns des autres parmi les radicaux hydrocarbonés aliphatiques contenant un à dix atomes de carbone, de préférence les radicaux méthyle, éthyle, n-propyle ou i-propyle.

9. Système réactionnel monocomposant selon l'une quelconque des revendications précédentes, **caractérisé en ce que** le stabilisateur C) présente un point de trouble d'au moins 60 °C, mesuré dans une solution aqueuse à 4 % en poids du stabilisateur, avec élévation graduelle de la température à partir de 20 °C avec un taux de chauffe de 2 °C/min, et détermination du point de trouble par évaluation optique du moment du début du trouble.

10. Système réactionnel monocomposant selon l'une quelconque des revendications précédentes, **caractérisé en ce que** la teneur en polyisocyanate monomère est de moins de 1 % en poids, notamment de moins de 0,9 % en poids, de préférence de 0,1 % en poids ou moins.

11. Système réactionnel monocomposant selon l'une quelconque des revendications précédentes, **caractérisé en ce que** le système réactionnel monocomposant contient en outre un acide ayant une valeur de pKs d'au moins 0, notamment en une quantité de 10 à 500 ppm par rapport à la quantité de composant polyisocyanate organique A), de préférence de 50 à 300 ppm.

12. Système réactionnel monocomposant selon l'une quelconque des revendications précédentes, **caractérisé en ce que** le système réactionnel monocomposant contient :
70 à 90 % en poids d'un composant polyisocyanate organique A),
0,5 à 5 % en poids d'un composant réactif avec les isocyanates B),
0,1 à 1,0 % en poids d'un stabilisateur C),
0,1 à 1,0 % en poids d'un catalyseur D) et/ou
9 à 25 % en poids d'adjuvants et d'additifs, ainsi que d'agents gonflants et de co-agents gonflants,
à chaque fois par rapport au système réactionnel monocomposant.

13. Procédé de fabrication de mousses dures de PUR, selon lequel les composants A) à E) d'un système réactionnel monocomposant selon l'une quelconque des revendications 1 à 12 sont mélangés les uns avec les autres et laissés réagir, notamment sous l'effet d'humidité.

14. Mousse dure, pouvant être obtenue par mélange et mise en réaction des composants A) à E) d'un système réactionnel monocomposant selon l'une quelconque des revendications 1 à 12.

15. Utilisation d'un système réactionnel monocomposant selon l'une quelconque des revendications 1 à 12 en tant que mousse de montage 1K, le système réactionnel monocomposant et un agent gonflant, et éventuellement un co-agent gonflant, étant notamment placés dans un contenant sous pression.

16. Contenant sous pression, notamment contenant sous pression à usage unique, contenant un système réactionnel monocomposant selon l'une quelconque des revendications 1 à 12 et un agent gonflant, et éventuellement un co-agent gonflant.
